(19) Europäisches Patentamt / European Patent Office / Office européen des brevets

(11) **EP 3 637 268 A1**

(12) **EUROPEAN PATENT APPLICATION**
published in accordance with Art. 153(4) EPC

(43) Date of publication:
**15.04.2020 Bulletin 2020/16**

(21) Application number: **18814260.8**

(22) Date of filing: **04.06.2018**

(51) Int Cl.:
**G06F 13/00** (2006.01)     **H04L 12/70** (2013.01)

(86) International application number:
**PCT/JP2018/021304**

(87) International publication number:
**WO 2018/225667 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2017 JP 2017110562**

(71) Applicant: **NEC Corporation**
**Tokyo 108-8001 (JP)**

(72) Inventors:
• **ASHINO Yuki**
 **Tokyo 108-8001 (JP)**
• **YAMANE Masato**
 **Tokyo 108-8001 (JP)**

(74) Representative: **Vossius & Partner**
**Patentanwälte Rechtsanwälte mbB**
**Siebertstrasse 3**
**81675 München (DE)**

(54) **INFORMATION PROCESSING DEVICE, INFORMATION PROCESSING SYSTEM, INFORMATION PROCESSING METHOD, AND RECORDING MEDIUM**

(57) In order to aggregate information for detecting suspicious communication without requiring unauthorized entry, this information processing device includes: a data generation means for extracting a transmission origin from communication data received by a prescribed device, and generating first data that includes the transmission origin and a time associated with the communication in the communication data; and a frequency aggregation means for aggregating a first frequency of reception of the communication data for each transmission origin on the basis of the first data in a first period and a second period that includes the first period and is longer than the first period.

Fig. 1

## Description

## Technical Field

The present invention relates to information processing, and in particular, relates to an information processing device and the like for processing information associated with detection.

## Background Art

With spread of networks such as the Internet, unauthorized access via a network is increasing. Therefore, various kinds of instruction detection system (IDS) and security operation center (SOC) are used.

The IDS is software and/or hardware (e.g., see Patent Literature (PTL) 1) that detects unauthorized access to an information technology (IT) system or a network.

An electronic mail classification device described in PTL 1 determines, by using a feature vector of past unauthorized data (a spam mail in PTL 1), whether or not a received mail is an unauthorized mail.

The SOC is an organization in charge of monitoring and countermeasures against intrusion into an IT system by a customer and the like by using the IDS or the like.

[Citation List]

[Patent Literature]

[PTL 1] Japanese Unexamined Patent Application Publication No. 2011-227850

## Summary of Invention

[Technical Problem]

In order to operate a system and a network safely, it is desirable that breach never occurs.

However, as described in PTL 1, general IDS and SOC determine unauthorized access and/or intrusion by using information (e.g., signature or feature) related to intrusion occurring in the past. Without intrusion occurring, the general IDS and the like are not capable of responding to intrusion. In other words, including PTL 1 and the like, the general IDS and SOC need to be intruded at least once.

Thus, including PTL 1, there is an issue that the general IDS and the like are not able to identify a communication from a suspicious person and the like prior to intrusion.

An object of the present invention is to solve the above-described issue and to provide an information processing device and the like that provide information for detecting a suspicious communication without requiring intrusion.

[Solution to Problem]

An information processing device according one aspect of the present invention includes:

data generation means for extracting a transmission source of communication from communication data received by a predetermined device, and generating first data that include the transmission source and a time associated with communication and included in the communication data; and
frequency totaling means for totaling a first frequency of reception of the communication data for the each transmission source, based on the first data, in each of a first period and a second period that includes the first period and is longer than the first period.

An information processing method according to one aspect of the present invention includes:

extracting a transmission source of communication from communication data received by a predetermined device, and generating first data that include the transmission source and a time associated with communication and included in the communication data; and
totaling a first frequency of reception of the communication data for the each transmission source, based on the first data, in each of a first period and a second period that includes the first period and is longer than the first period.

A recording medium according to one aspect of the present invention computer-readably records a program.

The program causes a computer to execute:

processing of extracting a transmission source of communication from communication data received by a predetermined device, and generating first data that include the transmission source and a time associated with communication and included in the communication data; and

processing of totaling a first frequency of reception of the communication data for the each transmission source, based on the first data, in each of a first period and a second period that includes the first period and is longer than the first period.

An information processing system according one aspect of the present invention includes:

the above information processing device;

an acquisition device that acquires the communication data and transmits the acquired communication data to the information processing device; and

a display device that receives the first frequency from the information processing device and displays the received first frequency.

[Advantageous Effects of Invention]

The present invention is able to produce an advantageous effect of providing information for detecting a suspicious communication without requiring intrusion.

**Brief Description of Drawings**

[Fig. 1] Fig. 1 is a block diagram illustrating one example of a configuration of an information processing device according to a first example embodiment of the present invention.

[Fig. 2] Fig. 2 is a diagram illustrating a result of a totaling of frequencies for each transmission source during a plurality of periods from a predetermined start date, performed by the information processing device according to the first example embodiment by using actual communication data.

[Fig. 3] Fig. 3 is a block diagram illustrating one example of a configuration of an information processing system including the information processing device according to the first example embodiment.

[Fig. 4] Fig. 4 is a block diagram illustrating one example of a hardware configuration of the information processing device according to the first example embodiment.

[Fig. 5] Fig. 5 is a block diagram illustrating one example of a configuration of an information processing device according to a second example embodiment.

[Fig. 6] Fig. 6 is a diagram for describing an operation of a frequency totaling unit according to the second example embodiment.

[Fig. 7] Fig. 7 is a diagram illustrating one example of frequency totaling for a set of a transmission source and a destination.

[Fig. 8] Fig. 8 is a flowchart illustrating one example of the operation of a frequency totaling unit according to the second example embodiment.

**Example Embodiment**

In the following, example embodiments of the present invention are described with reference to the drawings.

Note that each drawing is for describing the example embodiments of the present invention. However, the present invention is not limited to the description of each drawing. Further, similar components in each drawing are assigned with the same numbers, and thereby repeated description thereof may be omitted. Furthermore, in the drawings used for the following description, with regard to a component of a portion that does not relate to the description of the present invention, description thereof may be omitted and such a component may not be illustrated.

<Technique related to the invention>

First, a technique related to the present invention is described.

A device or an organization (hereinafter, simply referred to as "IDS") such as a general IDS that detects fraud has a purpose of blocking intrusion itself. Specifically, the IDS achieves blocking by directly determining received communication data.

In this way, the IDS blocks breach by determining received communication data. Therefore, a comparatively short period (generally, for several minutes to several hours, at most, for around one day) is used as a continuous monitoring time for communication at the IDS.

However, in order to intrude successfully, an intruder who attempts intrusion searches for an intrusion point that can be intruded into a system being target before the intrusion. When searching out the intrusion point, the intruder intrudes therethrough.

For this search, a communication (a communication that is not illegal) that cannot be distinguished from a normal communication is used in such a way as not to be noticed by an intrusion destination. Further, this search requires a certain number of times. Therefore, this search is generally repeated at a certain long time interval (e.g., several days, one month, or several months) by using a computer or the like instead of performing manually. Note that the interval to be used for the search may include some variation.

In order to detect a suspicious communication that may perform this search, an analysis using communication data in a comparatively long period (e.g., several months) is required. In other words, the analysis using communication data in a long period may find a transmission source transmitting a suspicious communication that would be a search before intrusion.

However, the amount of data to be communicated in a network is extremely large. For example, in a single organization (e.g., a department consisting of several to several tens of people), traffic per day is several giga-byte (GB) to several tens of GB. Traffic per month is several tens of GB to several hundreds of GB. Then, traffic is expected to increase further in the future.

Therefore, an extremely large storage capacity is required in order to store data to be communicated in a network over a long period.

Further, as the amount of data increases, a processing time for storing data increases. For example, in a general data base, a time for storing several GB of data is several hours.

Further, even though data can be stored, generation of information for detecting whether or not the communication is a suspicious communication requires execution of processing (e.g., search processing) using the stored data. This processing load is also very large.

For example, a search time of data depends on search processing to be employed and, with respect to an increase in the amount of data, the search time of data generally increases at a higher rate than an increase rate of the amount of data. Therefore, when the amount of stored data increases, the time for search processing of data extremely increases.

A technique of search efficiency is proposed. However, a technique capable of processing in a practical time even for the above-described amount of data for a long period in a network has not been proposed.

For example, as a technique of reducing a search time, there is a technique using hash. However, since data being target are communication data, the data include a plurality of pieces of information such as a transmission source and a destination. The hash for searching such data needs to respond to a search performed by combining data (e.g., a transmission source and a destination) included in communication data. The number of communication data being target exceeds 100 million (several tens of GB). The number of hash data that need to be generated is the number of combinations of the included data, resulting in a huge number. As described above, when the method using hash is applied to communication data in a long period in an actual network, both a generation time of the hash and the storage capacity for the generated hash are extremely large and it is difficult to apply to communication data for a long period.

When a length of hash is shortened or the number of hash to be stored is reduced, the processing time of the search using hash is shortened. In this case, however, a hash collision occurs more often. When a hash collision occurs, normal search processing is required. Therefore, shortening hash is difficult to be applied to communication data in an actual network.

Thus, a general monitoring device such as the IDS is not capable of handling an analysis of communication data in a long period that may detect a transmission source of a suspicious communication.

However, in order to prevent breach, it is desired to provide information for detecting a suspicious communication used for the search of an intruder and the like before breach occurs, in other words, without requiring breach.

By using a configuration and an operation described below, the example embodiments of the present invention are able to achieve the provision of information for detecting a suspicious communication by using data in a long period without requiring breach.

<First Example Embodiment

A first example embodiment is described below with reference to the drawings.

Any data being target for processing (hereinafter, referred to as "target data") in an information processing device 100 according to the first example embodiment is applicable. The information processing device 100 may perform processing of communication data in a network. Alternatively, the information processing device 100 may perform processing of access data in a storage device (e.g., redundant arrays of inexpensive (independent) disks (RAID)).

Further, the information processing device 100 may perform processing of communication data received by the information processing device 100. Alternatively, the information processing device 100 may perform processing of communication data received by another device or an organization.

Then, the information processing device 100 generates data (hereinafter, referred to as "data for totaling") for totaling a frequency from target data, and totals a frequency in the data for totaling.

Hereinafter, as one example, the information processing device 100 performs processing of communication data received by a predetermined device (e.g., the information processing device 100 or a device to be determined). Then, the information processing device 100 totals, as information for detecting a suspicious transmission source in the communication data, a frequency associated with information (e.g., an address of the transmission source) related to a transmission source in the communication data.

However, this does not limit the target data and the data for totaling in the information processing device 100 according to the present example embodiment. For example, the information processing device 100 may perform processing of information related to not only the transmission source but also a destination and/or a communication time. Alternatively, the information processing device 100 may perform processing of predetermined data included in a payload of the communication data. Alternatively, the information processing device 100 may perform processing of an access source, an access destination, or an access time of data used for access to a predetermined storage device.

[Description of Configuration]

First, a configuration of the information processing device 100 according to the first example embodiment is described with reference to the drawings.

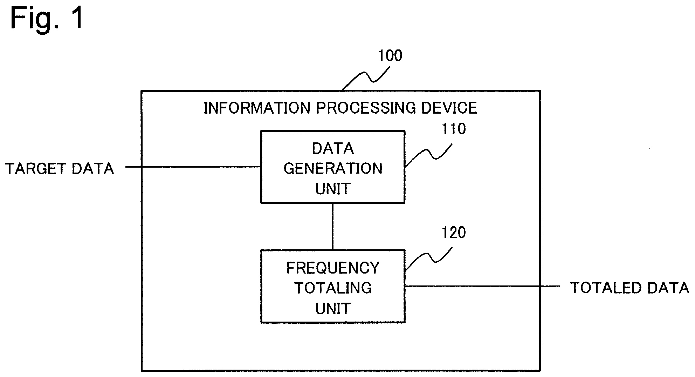

Fig. 1 is a block diagram illustrating one example of the configuration of the information processing device 100 according to the first example embodiment of the present invention. The information processing device 100 includes a data generation unit 110 and a frequency totaling unit 120.

The data generation unit 110 extracts, as data for totaling, data to be processed (in this case, data related to a transmission source) from target data (in this case, communication data), and generates the data for totaling including the data being target.

The communication data include other information in addition to a body of data (payload) to be communicated. For example, the communication data include information, such as a transmission source and a destination, related to a device (also referred to as a node or the like) necessary for achieving communication. The information related to the transmission source is, for example, information, such as an address and a port number of the transmission source, related to a location and a function of the transmission source. Alternatively, the communication data may include information, such as a transmission time and a reception time, related to a time. Alternatively, the communication data may include information, such as a relay node, associated with a communication intermediary. As described above, the communication data include a plurality of pieces of information.

The data generation unit 110 extracts information related to a transmission source (e.g., an address of the transmission source)) from the communication data, in case of the data to be processed.

Note that the data generation unit 110 may select communication data for extracting data for totaling. For example, in transmission control protocol (TCP), a transmission source first transmits a synchronize (SYN) packet when establishing a connection. Then, the data generation unit 110 may extract a transmission source in the SYN packet. In this case, the information processing device 100 can further reduce the amount of data to be processed.

Further, the data generation unit 110 extracts or generates, as data for totaling, information (e.g., a time when a target device receives the communication data) related to a communication time in the communication data. For example, the data generation unit 110 may extract, when generating data for totaling based on a communication log, a reception time of the communication from the log. Alternatively, when the data generation unit 110 performs processing of directly received communication data and generates data for totaling, the data generation unit 110 may include the time when the communication data is received in the data for totaling as information related to a time.

The frequency totaling unit 120 totals a frequency of reception of communication data for each type of transmission source (e.g., for each address of the transmission source) in a predetermined period, based on the data generated by the data generation unit 110.

For example, it is assumed that the predetermined period is for one month from B hour 00 minute on the day A.

In this case, for example, the data generation unit 110 extracts a transmission source and a reception time from a communication data log, generates data for totaling, and transmits the data for totaling to the frequency totaling unit 120. Alternatively, when receiving communication data directly, the data generation unit 110 may start generating data for totaling from B hour 00 minute on the day A. Alternatively, the data generation unit 110 may always receive communication data, generate data for totaling, and transmit the data for totaling to the frequency totaling unit 120. The communication data are always received. Therefore, when operating as described above, the data generation unit 110 and the frequency totaling unit 120 may operate simultaneously or in parallel.

The frequency totaling unit 120 totals a frequency (e.g., the number of communication) for each transmission source for one month from B hour 00 minute on the day A in the data for totaling received from the data generation unit 110.

In this case, the number of pieces of data as a result of totaling in the frequency totaling unit 120 becomes the number of types of the transmission source (in this case, the address of the transmission source).

For example, in general, one communication processing is achieved by using a plurality of pieces of communication data. Therefore, in most communication, the number of transmission sources is considerably smaller than the number of pieces of communication data. Thus, the number of pieces of data as a result of totaling in the frequency totaling unit 120 becomes a considerably small number.

However, an intruder may use a plurality of transmission sources in such a way as not to be detected easily. In this case, the number of transmission sources is greater than the number of intruders. However, a communication (a suspicious communication) used by an intruder for the search is a communication with a considerable interval. Therefore, even when an intruder uses a plurality of transmission sources, the number of transmission sources is smaller than the number of pieces of communication data.

As described above, the amount of data as a result of totaling in the frequency totaling unit 120 becomes considerably smaller than the amount of communication data. Therefore, the frequency totaling unit 120 can easily store data and perform processing of data.

Note that the operation of the information processing device 100 is not limited to the above. For example, the data generation unit 110 may generate data for totaling including an address of the transmission source and a reception time in the communication data, and store the data for totaling in an unillustrated storage unit. Then, the frequency totaling unit 120 may total a frequency (the number of communication) for each transmission source, based on the data for totaling included in a target period, from the data for totaling stored in the storage unit.

In this case, the data for totaling to be stored is a part of information (e.g., an address of the transmission source and a reception time) included in the communication data.

An address of the transmission source and a reception time are data typically much smaller than the communication data. For example, transmission control protocol (TCP), which is one example of communication data, has a variable size, and is typically several thousand bytes. On the other hand, internet protocol (IP) address, which is one example of address, is 4-byte or 8-byte of data. The reception time data is several bytes of data. Thus, the amount of data that needs to be stored is much smaller amount of data than the amount of communication data, and is a storable amount.

Therefore, even in this case, the information processing device 100 can easily store the data for totaling.

Further, an additional operation in the frequency totaling unit 120 is a reading operation of the data for totaling. However, the amount of data for totaling is small. Also, the reading operation of data is usually a low load operation. For this reason, the increase in the load in the frequency totaling unit 120 is a small amount compared to the totaling operation.

A total value for each transmission source in one period is a frequency of transmission for each transmission source in a certain period. A frequency of transmission by an intruder is information that is unknown until being breached. Accordingly, the frequency of transmission in one period is not necessarily effective as a determinant material for a suspicious communication.

Therefore, the frequency totaling unit 120 according to the first example embodiment totals a frequency in a plurality of periods instead of one period. The totaling of frequencies is data indicating a change in the frequencies over a plurality of periods.

Specifically, the frequency totaling unit 120 sets a minimum period (a first period), further sets a period (a second period) that includes the minimum period and is longer than the minimum period, and totals frequencies in the minimum period and in the plurality of set periods. Each period has a different length.

For example, the frequency totaling unit 120 totals a frequency in a plurality of periods with the same start time. Alternatively, the frequency totaling unit 120 totals a frequency in a plurality of periods with the same end time.

Note that any unit of period in the frequency totaling unit 120 is applicable. For example, the frequency totaling unit 120 may use, as the unit of period, second, minute, hour, day, or month. For example, the frequency totaling unit 120 may use start date or start month instead of start time.

Further, any length of period is applicable. For example, the period is one week, one month, three months, half a year, or one year.

For example, the frequency totaling unit 120 totals a frequency of communication data for each transmission source in a plurality of periods (each period from one day to one year) with increments of one day. Specifically, for example, the frequency totaling unit 120 determines a start date and sets the start date as a minimum period. Then, the frequency totaling unit 120 totals, from the start date, frequencies in one day (start date), two days (start date and next day), ..., 30 days (about one month), ..., 90 days (about three months), ..., 180 days (about six months), ..., 360 days (about one year). Herein, this is one example of setting one day as a minimum period (the first period). This is one example of setting two days to 360 days as a period (the second period) longer than the minimum period.

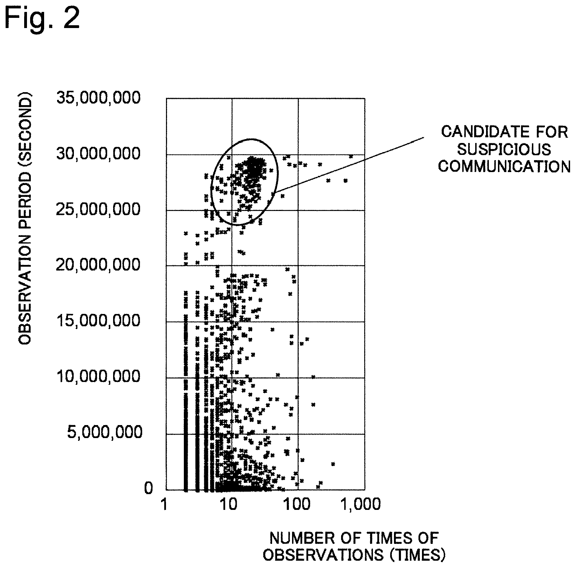

Fig. 2 is a diagram illustrating a result of a totaling of a frequency for each transmission source in a plurality of periods from a predetermined start date, performed by the information processing device 100 according to the first example embodiment by using actual communication data. The vertical axis of Fig. 2 represents an observation period (totaling period). The horizontal axis of Fig. 2 represents the number of times of observations (totaled frequencies). However, the horizontal axis is logarithmic axis.

Referring to Fig. 2, communication with frequencies ranging from ten to several tens of times is observed from 25,000,000 seconds to 30,000,000 seconds (approximately ten months to one year) of the observation time. In Fig. 2, this communication is surrounded by an ellipse. The transmission source of this communication transmits on average once to several times a month.

This communication is obviously separated from the rest. In other words, this part of communication is not normal communication but a candidate for a suspicious communication or failure.

Then, a user of the information processing device 100 may confirm the transmission source of this communication, and confirm whether or not this communication becomes a candidate for an unauthorized transmission source.

For example, it is assumed that the data generation unit 110 generates data for totaling including data related to a location of a transmission source and the frequency totaling unit 120 totals a frequency for each location of the transmission source. In this case, a user can determine the location (e.g., a country or a region) of the transmission source, based on the frequency for each location of the transmission source. For example, an IP address is assigned to an applicant organization by a predetermined organization (e.g., Internet Corporation for Assigned Names and Numbers (ICANN)), based on an application including an organization name and location. Then, when the information processing device 100 uses an IP address as transmission source data, a user may determine the organization name of the transmission source or the location of the organization (e.g., a country or a region) from the IP address of the transmission source.

Alternatively, the information processing device 100 may use data related to a function of the transmission source. For example, the data generation unit 110 generates data for totaling including the location and the function of the transmission source. Then, the frequency totaling unit 120 totals a frequency for each combination of location and function of the transmission source. In this case, a user can confirm the location and the function being used of the transmission source, based on the data.

For example, when the information processing device 100 uses an IP address and a port number used in a general network as the data of the transmission source, a user can confirm a function being used for each transmission source, based on the IP address and the port number. For example, a user can narrow down the organization being the transmission source and the activities (organized activities). Note that, in the general Internet, when a port number is 23, the communication is Telnet. When the port number is 80 or 8080, the communication is hyper-text transfer protocol (HTTP).

In this way, the information processing device 100 is able to provide information related to a location and/or a function of a transmission source for a user.

The information processing device 100 totals a frequency (e.g., the number of communication) in a plurality of periods. This totaling is data indicating a change in frequencies over the plurality of periods. Then, as illustrated in Fig. 2, this totaling is information that can be used for detecting a suspicious communication.

The above-described period is considerably longer period than an observation period of data handled in the IDS and the like. The IDS and the like do not achieve an observation in such a long period.

Since the information processing device 100 handles a frequency related to a part of communication data (e.g., a transmission source), the information processing device 100 can total the frequency of communication in such a long period. Then, a user of the information processing device 100 can detect, by using such a frequency, a suspicious communication and/or activities of a transmission source and the like as described above.

The inventors of the present invention have newly discovered this finding.

Further, the communication data used for generating the data illustrated in Fig. 2 is not communication data after being intruded but communication data in a normal operation. In this way, the information processing device 100 provides information that can detect a suspicious communication without requiring intrusion, that is, by using normal communication data instead of suspicious communication data.

[Description of an Advantageous Effect]

Next, an advantageous effect of the information processing device 100 according to the first example embodiment is described.

The information processing device 100 according to the first example embodiment can produce an advantageous effect of providing information for detecting a suspicious communication without requiring intrusion.

The reason is as follows.

The information processing device 100 includes the data generation unit 110 and the frequency totaling unit 120. The data generation unit 110 extracts a transmission source of communication from communication data received by a predetermined device, and generates first data that includes the transmission source and a time associated with the communication and included in the communication data. Then, the frequency totaling unit 120 totals a first frequency of reception of the communication data for each transmission source, based on the first data, in each of a first period and a second period that includes the first period and is longer than the first period. "First data" and "first frequency" are described later together with "second data" and "second frequency".

Herein, the data generation unit 110 and the frequency totaling unit 120 do not require communication data associated with suspicious intrusion. In other words, the information processing device 100 does not require suspicious breach.

Further, the data generation unit 110 extracts, as data for totaling, a part of data from the communication data, particularly smaller data than the communication data such as transmission source data, and generates the data for totaling. Further, the frequency totaling unit 120 totals a frequency for each transmission source. In other words, the frequency totaling unit 120 performs data processing of approximately the number of transmission sources. As described above, the information processing device 100 can operate using a processable amount of data.

Then, the frequency totaling unit 120 totals frequencies in a first period (a minimum period) and a second period that includes the minimum period and is longer than the minimum period. For example, the frequency totaling unit 120 totals a frequency in a plurality of periods with the same start date.

As a result, as illustrated in Fig. 2, the information processing device 100 provides information capable of detecting a suspicious communication being found based on an observation over a long period.

[Description of System]

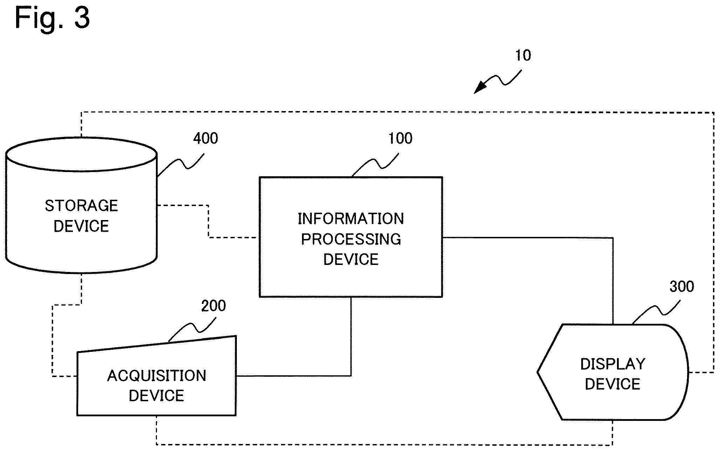

Fig. 3 is a block diagram illustrating one example of a configuration of an information processing system 10 including the information processing device 100 according to the first example embodiment.

The information processing system 10 includes the information processing device 100, an acquisition device 200, and a display device 300. The information processing system 10 may further include a storage device 400.

The acquisition device 200 acquires communication data. Then, the acquisition device 200 transmits the communication data to the information processing device 100. Further, the acquisition device 200 may transmit another information to the information processing device 100. For example, the acquisition device 200 may transmit, to the information processing device 100, a period for totaling a frequency (e.g., a minimum period and a maximum period) and/or data to be totaled (e.g., an instruction for totaling a transmission source).

Any acquisition source in the acquisition device 200 is applicable. The acquisition device 200 may acquire communication data from the storage device 400 and transmit the communication data to the information processing device 100. Alternatively, the acquisition device 200 may acquire communication data from an unillustrated device (e.g., a communication device being observed).

Note that the acquisition device 200 may store the acquired communication data in the storage device 400 instead of the information processing device 100. In this case, the information processing device 100 operates by using the communication data stored in the storage device 400.

The information processing device 100 performs the operation already described, by using the communication data. The information processing device 100 transmits, to the display device 300, a frequency for each transmission source in a plurality of totaled periods (a minimum period, and a period including the minimum period and longer than the minimum period), based on a predetermined instruction (e.g., an instruction from the acquisition device 200).

Note that the information processing device 100 may store the frequency for each transmission source in the plurality of totaled periods in the storage device 400. In this case, the display device 300 acquires the data (the frequency) from the storage device 400.

The display device 300 displays the received data (e.g., reception frequency for each transmission source). For example, the display device 300 displays the frequency for each transmission source in the plurality of periods as illustrated in Fig. 2.

The display device 300 may receive, when data is received or displayed, information associated with display from the acquisition device 200 or the information processing device 100. For example, the display device 300 may receive designation of a display range of data from the acquisition device 200 or the information processing device 100.

The configuration of the information processing system 10 is not limited to the configuration in Fig. 3. The acquisition device 200, the display device 300, and/or the storage device 400 may be included in the information processing device 100.

[Hardware Configuration]

Hardware of the information processing device 100 is described.

The information processing device 100 is configured as described below. For example, each component of the information processing device 100 may be configured with a hardware circuit. Alternatively, in the information processing device 100, each component may be configured by using a plurality of devices connected via a network. Alternatively, in the information processing device 100, the plurality of components may be configured with one piece of hardware.

Alternatively, the information processing device 100 may be achieved as a computer device including a central processing unit (CPU), a read only memory (ROM), and a random access memory (RAM). The information processing device 100 may be achieved as a computer device further including an input and output circuit (IOC) in addition to the above-described configuration. The information processing device 100 may be achieved as a computer device further including a network interface circuit (NIC) in addition to the above-described configuration.

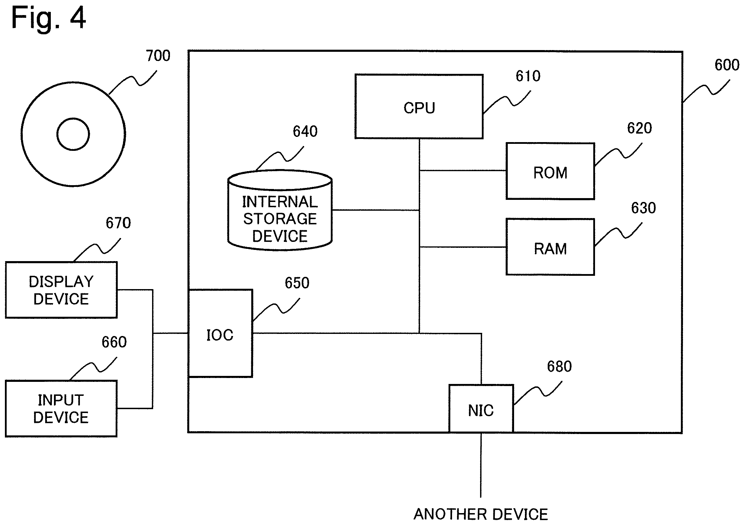

Fig. 4 is a block diagram illustrating one example of a hardware configuration of the information processing device 100 according to the first example embodiment. In Fig. 4, an information processing device 600 is one example of a hardware configuration of the information processing device 100 according to the first example embodiment.

The information processing device 600 includes a CPU 610, a ROM 620, a RAM 630, an internal storage device 640, an IOC 650, and a NIC 680, and configures a computer device.

The CPU 610 reads a program from the ROM 620. Then, the CPU 610 controls the RAM 630, the internal storage device 640, the IOC 650, and the NIC 680, based on the read program. Then, the computer including the CPU 610 controls these configurations, and achieves the functions as the data generation unit 110 and the frequency totaling unit 120 illustrated in Fig. 1.

The CPU 610 may use, when achieving each function, the RAM 630 or the internal storage device 640 as a temporary storage medium for the program.

Further, the CPU 610 may read a program included in a storage medium 700 which stores a readable program by a computer, by using an unillustrated storage medium reading device. Alternatively, the CPU 610 may receive a program from an unillustrated external device via the NIC 680, store the program in the RAM 630, and operate based on the stored program.

The ROM 620 stores a program executed by the CPU 610 and fixed data. The ROM 620 is, for example, a programmable-ROM (P-ROM) or a flash ROM.

The RAM 630 temporarily stores a program executed by the CPU 610 and data. The RAM 630 is, for example, a dynamic-RAM (D-RAM).

The internal storage device 640 stores data and a program stored in the information processing device 600 for a long time. Also, the internal storage device 640 may operate as a temporary storage device of the CPU 610. The internal storage device 640 is, for example, a hard disk device, a magneto-optical disk device, a solid state drive (SSD), or a disk array device.

The internal storage device 640 may operate, when the information processing device 600 is used for the information processing system 10, as the storage device 400.

Herein, the ROM 620 and the internal storage device 640 are non-transitory storage media. On the other hand, the RAM 630 is a transitory storage medium. Then, the CPU 610 can operate, based on a program stored in the ROM 620, the internal storage medium 640, or the RAM 630. In other words, the CPU 610 can operate by using a non-transitory storage medium or a transitory storage medium.

The IOC 650 mediates data between the CPU 610, and an input device 660 and a display device 670. The IOC 650 is, for example, an IO interface card or a universal serial bus (USB) card. Further, the IOC 650 is not limited to a wired connection such as USB but may be used a wireless connection.

The input device 660 is a device that receives an input instruction from an operator of the information processing device 600. The input device 660 is, for example, a keyboard, a mouse, or a touch panel.

The input device 660 may operate, when the information processing device 600 is used for the information processing system 10, as the acquisition device 200.

The display device 670 is a device that displays information to an operator of the information processing device 600. The display device 670 is, for example, a liquid crystal display.

The display device 670 may operate, when the information processing device 600 is used for the information processing system 10, as the display device 300.

The NIC 680 relays data transfer to an unillustrated external device via a network. The NIC 680 is, for example, a local area network (LAN) card. Further, the NIC 680 is not limited to a wired connection but may be used a wireless connection.

The NIC 680 may mediate, when the information processing device 600 is used for the information processing system 10, connection to the acquisition device 200, the display device 300, and/or the storage device 400.

The information processing device 600 configured in this manner can produce an advantageous effect similar to the advantageous effect of the information processing device 100.

The reason is that the CPU 610 of the information processing device 600 can achieve, based on a program, a function similar to the function of the information processing device 100.

<Second Example Embodiment>

As described above, in the information processing device 100 according to the first example embodiment, the amount of data required for operation is a small amount compared to the entire communication data. Therefore, the information processing device 100 can total data (a frequency) for detecting a suspicious communication in communication data.

However, considering the future increase of data in a network, further efficiency is desired. Then, as a second example embodiment, an information processing device 101 in which the efficiency of the operation in the frequency totaling unit 120 is improved is described. Note that, in the following description, a data generation unit 110 and a frequency totaling unit 121 operate in order. These operations are, however, for clarifying. the description according to the second example embodiment. Similar to the first example embodiment, the data generation unit 110 and the frequency totaling unit 121 may operate simultaneously in at least some of the operations.

Next, the second example embodiment is described with reference to the drawings.

[Description of Configuration]

First, a configuration of the information processing device 101 according to the second example embodiment is described with reference to the drawings.

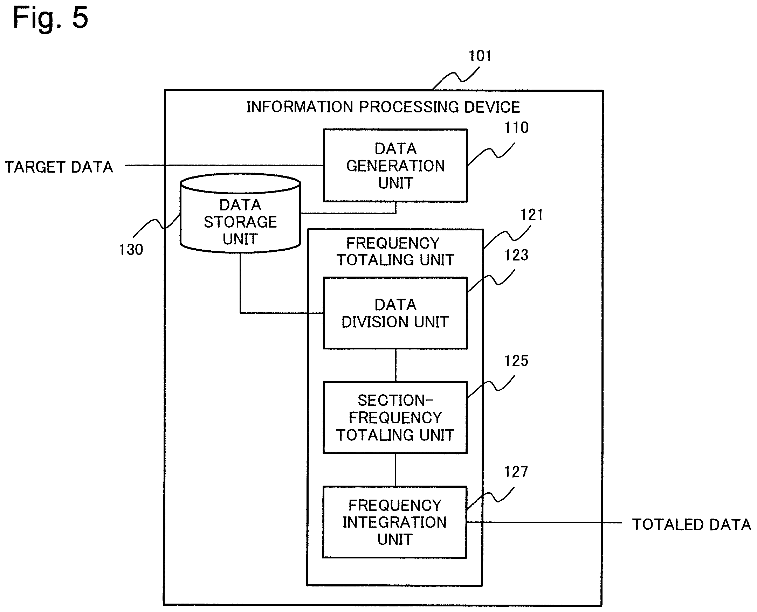

Fig. 5 is a block diagram illustrating one example of a configuration of the information processing device 101 according to the second example embodiment. The information processing device 101 includes the data generation unit 110, the frequency totaling unit 121, and a data storage unit 130. The frequency totaling unit 121 includes a data division unit 123, a section-frequency totaling unit 125, and a frequency integration unit 127.

Note that the information processing device 101 may be configured with the hardware illustrated in Fig. 4. In this case, the internal storage device 640 operates as the data storage unit 130.

The data generation unit 110 generates data for totaling to be processed in the frequency totaling unit 121, similarly to the data generation unit 110 according to the first example embodiment. In the description according to the present example embodiment, the data generation unit 110 generates totaled data including a transmission source in communication data and a reception time of the communication data. Then, the data generation unit 110 stores the generated data for totaling in the data storage device 130. The data generation unit 110 generates the data for totaling associated with a maximum period and stores the generated data for totaling in the data storage device 130.

The data storage unit 130 stores the data for totaling.

The data division unit 123 divides the data for totaling into a predetermined number of pieces of data or a piece of data for each predetermined time (hereinafter, referred to as "section data") along a time of the data for totaling. In order to facilitate the distinction of data, the data for totaling and the section data may be referred to as "first data" and "second data", respectively.

The section-frequency totaling unit 125 totals a frequency (hereinafter, referred to as "section frequency") of reception for each transmission source in each piece of section data.

The frequency integration unit 127 integrates the section frequencies and totals the frequency (hereinafter, referred to as "integration frequency") of reception for each transmission source. The integration frequency is a frequency according to the first example embodiment. In order to facilitate the distinction of frequencies, the integration frequency and the section frequency may be referred to as "first frequency" and "second frequency", respectively. In other word, the frequency according to the first example embodiment is one example of the first frequency.

In general, a communication is transmitted with the volume collected to some extents for each transmission source. Therefore, the number of transmission sources included in each section is less than the number of transmission sources in the entire data for totaling. For this reason, it is assumed that a load and a storage capacity required for totaling a frequency in each section is reduced.

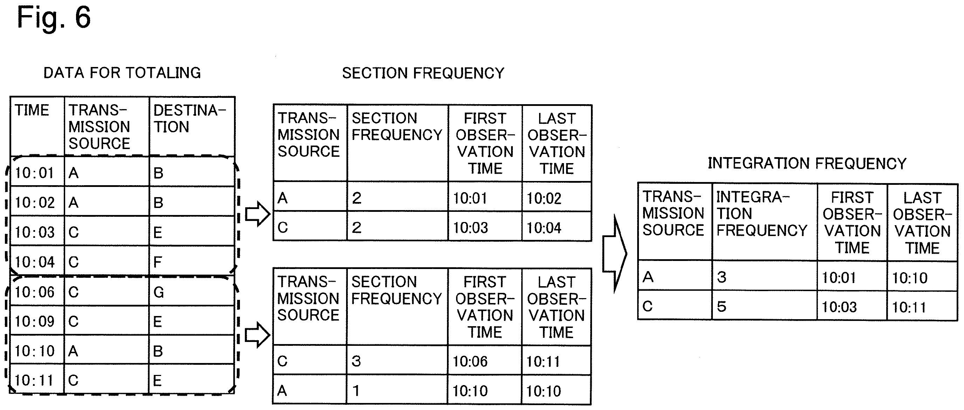

Fig. 6 is a diagram for describing an operation of the frequency totaling unit 121 according to the second example embodiment.

The table on the left side of Fig. 6 is one example of the data for totaling. The frequency totaling unit 121 totals a frequency for each transmission source, based on the data for totaling in Fig. 6.

The data division unit 123 divides the data for totaling into the section data. Each of two ranges enclosed by the dotted line on the left side of Fig. 6 is the section data.

The section-frequency totaling unit 125 totals the frequency (the section frequency) in each section data. The two tables in the center of Fig. 6 are one example of the section frequency for each section data.

The frequency integration unit 127 integrates the section frequencies and totals the frequency (the integration frequency) for each transmission source. The table on the right side of Fig. 6 is one example of the integration frequency.

This operation is described by using expressions. Variables used in the expressions are as follows.

x: the number of data for totaling (a total number of transmission sources included in data for totaling)
n: a total number of transmission sources (normally n<<x)
d: the number of sections
i: a variable indicating a section ($1 \leqq i \leqq d$)
f(a): a function indicating (average) search time when there are a number of transmission sources
$y_i$: the number of transmission sources in section i (normally $y_i \leqq n<<x$)

(1) In case of performing processing of all data at once

Search processing in the case of performing processing of all data at once is processing of searching a transmission source related to the data from all the transmission sources in all data. Therefore, the total search time is a time in which "a time (f(n)) to search a transmission source related to data from n number of transmission sources" is repeated by the number of times (x) of the data. In this case, the search time is acquired by the following expression 1.

[Expression 1]

$$f(n) \times x \cdots (1)$$

(2) In case of dividing data into sections

Search processing in the case of dividing data into sections is processing of searching a transmission source in each section and search processing in an integration of the results of each section. The total number of transmission sources in the section is, on average, a value (n/d) acquired by dividing the number of all the transmission sources by the number of sections.

Therefore, the search time in the section is the product of the search time "f(n/d)" in the section and the number of the data (x/d) in the section. This search occurs by the number of sections (d).

Also, search processing in the integration of the results of each section is processing of which the processing (f(n)) of searching all the transmission sources for each transmission source in each section, in all the sections, is repeated by the number of times ($y_i$) of transmission sources in each section.

The total search time in this case is the following expression 2.

[Expression 2]

$$\left[ f\left(\frac{n}{d}\right) \times \frac{x}{d} \right] \times d + \sum_i (f(n) \times y_i) = f\left(\frac{n}{d}\right) \times x + \sum_i (f(n) \times y_i) \cdots (2)$$

The first term of the left-hand side is the sum of the search time in each section. The second term is the time for integration. The right-hand side is a rearrangement of the first term of the left-hand side.

The number of transmission sources is very small (n<<x) compared to the number of communication data. In addition, the number of transmission sources included in each section in the integration processing is very small ($y_i$<<x) compared to the total number of data.

Accordingly, a value of the first term of the right-hand side is considerably smaller than the time (expression 1) in the case of performing processing of all data at once. Further, a value of the second term is also very smaller than the time (expression 1) in the case of performing processing of all data at once. As a result, the value of expression 2 is smaller than the value of expression 1. In other words, in the search processing of the transmission source, the search processing time in the case of dividing data into sections is considerably shorter than the time in the case of performing processing of all data at once.

Thus, the frequency totaling unit 121 can reduce the search time compared to the frequency totaling unit 120.

Note that, similarly to the first example embodiment, the totaling in the frequency totaling unit 121 is not limited to the totaling for each transmission source and, for example, a frequency of a set of a transmission source and a destination may be totaled.

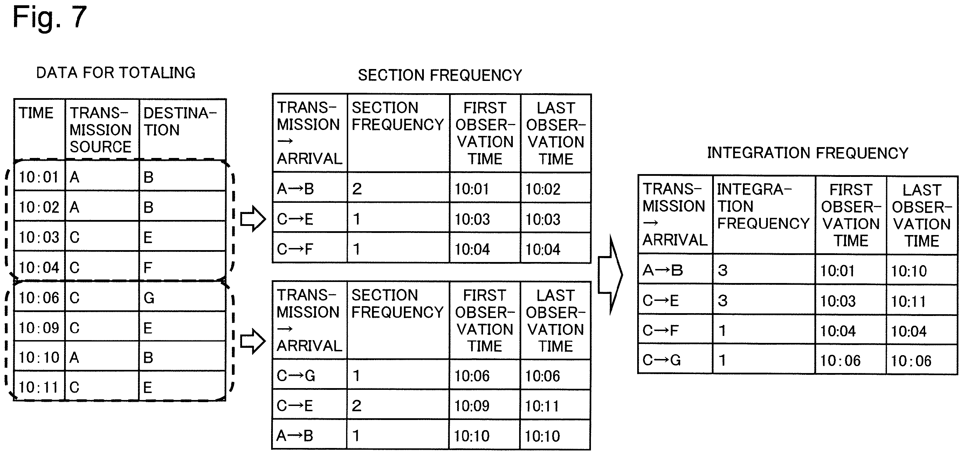

Fig. 7 is a diagram illustrating one example of frequency totaling for a set of a transmission source and a destination.

[Description of Operation]

Next, an operation of the frequency totaling unit 121 according to the second example embodiment is described with reference to the drawings.

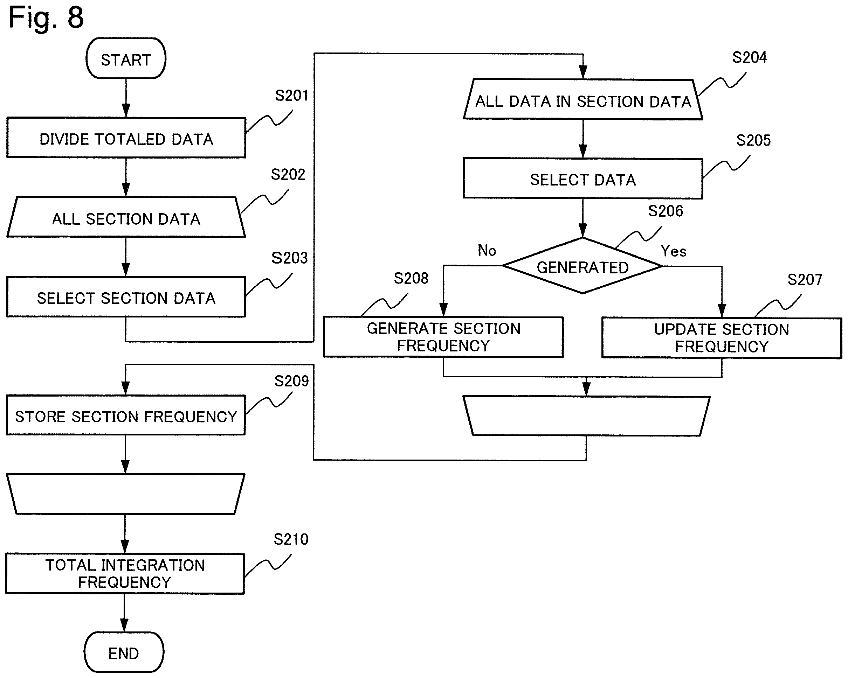

Fig. 8 is a flowchart illustrating one example of the operation of the frequency totaling unit 121 according to the second example embodiment.

The data division unit 123 divides the data for totaling into the section data (step S201).

The section-frequency totaling unit 125 repeats the following operation for all the section data (step S202).

The section-frequency totaling unit 125 selects one section data from the unprocessed section data (step S203).

The section-frequency totaling unit 125 performs the following operation for all data in the selected section data (step S204).

The section-frequency totaling unit 125 selects one piece of data from the unprocessed data in the section data (step S205).

The section-frequency totaling unit 125 determines whether data (section frequency) for storing a frequency related to a transmission source of the data has already generated (step S206).

When the data has been generated (Yes in step S206), the section-frequency totaling unit 125 updates the section frequency (step S207). Specifically, the section-frequency totaling unit 125 increases the value of section frequency by one.

When the data has not been generated (No in step S206), the section-frequency totaling unit 125 generates data (section frequency) related to the transmission source (step S208). An initial value of the section frequency to be generated is 1.

The section-frequency totaling unit 125 repeats the operations from steps S205 to S208 for all the data in the section data.

The section-frequency totaling unit 125 stores, after processing all the data in the section data, the generated and updated section frequency (step S209).

The section-frequency totaling unit 125 repeats the operations from steps S203 to S209 for all the sections.

When the section-frequency totaling unit 125 generates the section frequency related to all the section data, the frequency integration unit 127 integrates the section frequencies and totals the frequency (the integration frequency) for each transmission source (step S210).

Then, the frequency totaling unit 121 ends the operation.

[Description of Advantageous Effect]

An advantageous effect of the information processing device 101 according to the second example embodiment is described.

In addition to the advantageous effect of the first example embodiment, the information processing device 101 according to the second example embodiment can produce an advantageous effect of reducing a totaling time.

The reason is as follows.

The frequency totaling unit 121 divides the data for totaling into a plurality of sections, totals the section frequency in each section, integrates the totaled section frequencies, and totals the frequency (the integration frequency) of the transmission source. This operation is an operation performed by dividing the totaling of the frequency in the data for totaling into the totaling of the section frequency in the divided section and the integration of the section frequencies.

As described above, this operation can be achieved in a shorter time than performing processing of all data at once. As a result, the frequency totaling unit 121 is able to total the frequency in a considerably shorter time than the case where the processing of all data is performed at once.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2017-110562, filed on June 5, 2017, the disclosure of which is incorporated herein in its entirety by reference.

[Reference Signs List]

10    Information processing system
100   Information processing device

| 101 | Information processing device |
|-----|------------------------------|
| 110 | Data generation unit |
| 120 | Frequency totaling unit |
| 121 | Frequency totaling unit |
| 123 | Data division unit |
| 125 | Section-frequency totaling unit |
| 127 | Frequency integration unit |
| 130 | Data storage unit |
| 200 | Acquisition device |
| 300 | Display device |
| 400 | Storage device |
| 600 | Information processing device |
| 610 | CPU |
| 620 | ROM |
| 630 | RAM |
| 640 | Internal storage device |
| 650 | IOC |
| 660 | Input device |
| 670 | Display device |
| 680 | NIC |
| 700 | Storage medium |

**Claims**

1. An information processing device comprising:

   data generation means for extracting a transmission source of communication from communication data received by a predetermined device, and generating first data that include the transmission source and a time associated with communication and included in the communication data; and
   frequency totaling means for totaling a first frequency of reception of the communication data for the each transmission source, based on the first data, in each of a first period and a second period that includes the first period and is longer than the first period.

2. The information processing device according to claim 1, wherein
   a start time of the first period and a start time of the second period are same, or an end time of the first period and an end time of the second period are same.

3. The information processing device according to claim 1 or 2, wherein
   the frequency totaling means divides the first data into a plurality of pieces of second data along a time, totals a second frequency of reception of the communication data for the each transmission source in the second data, and totals the first frequency by integrating the second frequency.

4. The Information processing device according to any one of claims 1 to 3, wherein
   the data generation means generates, as the transmission source, the first data including a location of the transmission source and/or a function of the transmission source, and
   the frequency totaling means totals the first frequency for the each location and/or function.

5. The information processing device according to any one of claims 1 to 4, wherein
   the data generation means generates, as the first data, the first data further including a destination related to the transmission source in the communication data, and
   the frequency totaling means totals the first frequency for each set of the transmission source and the destination.

6. The information processing device according to any one of claims 1 to 5, wherein
   the frequency totaling means includes, as the second period, at least any one of one month, three months, half a year, and one year.

7. An information processing method comprising:

extracting a transmission source of communication from communication data received by a predetermined device, and generating first data that include the transmission source and a time associated with communication and included in the communication data; and

totaling a first frequency of reception of the communication data for the each transmission source, based on the first data, in each of a first period and a second period that includes the first period and is longer than the first period.

8. A recording medium computer-readably recording a program that causes a computer to execute:

processing of extracting a transmission source of communication from communication data received by a predetermined device, and generating first data that include the transmission source and a time associated with communication and included in the communication data; and

processing of totaling a first frequency of reception of the communication data for the each transmission source, based on the first data, in each of a first period and a second period that includes the first period and is longer than the first period.

9. An information processing system comprising:

the information processing device according to any one of claims 1 to 6;

an acquisition device that acquires the communication data and transmits the acquired communication data to the information processing device; and

a display device that receives the first frequency from the information processing device and displays the received first frequency.

## Fig. 1

# Fig. 2

# Fig. 3

# Fig. 4

EP 3 637 268 A1

# Fig. 5

TARGET DATA

**INFORMATION PROCESSING DEVICE** — 101

DATA GENERATION UNIT — 110

DATA STORAGE UNIT — 130

FREQUENCY TOTALING UNIT — 121

DATA DIVISION UNIT — 123

SECTION-FREQUENCY TOTALING UNIT — 125

FREQUENCY INTEGRATION UNIT — 127

TOTALED DATA

## Fig. 6

**DATA FOR TOTALING**

| TIME | TRANS-MISSION SOURCE | DESTINA-TION |
|---|---|---|
| 10:01 | A | B |
| 10:02 | A | B |
| 10:03 | C | E |
| 10:04 | C | F |
| 10:06 | C | G |
| 10:09 | C | E |
| 10:10 | A | B |
| 10:11 | C | E |

**SECTION FREQUENCY**

| TRANS-MISSION SOURCE | SECTION FREQUENCY | FIRST OBSER-VATION TIME | LAST OBSER-VATION TIME |
|---|---|---|---|
| A | 2 | 10:01 | 10:02 |
| C | 2 | 10:03 | 10:04 |

| TRANS-MISSION SOURCE | SECTION FREQUENCY | FIRST OBSER-VATION TIME | LAST OBSER-VATION TIME |
|---|---|---|---|
| C | 3 | 10:06 | 10:11 |
| A | 1 | 10:10 | 10:10 |

**INTEGRATION FREQUENCY**

| TRANS-MISSION SOURCE | INTEGRA-TION FREQUENCY | FIRST OBSER-VATION TIME | LAST OBSER-VATION TIME |
|---|---|---|---|
| A | 3 | 10:01 | 10:10 |
| C | 5 | 10:03 | 10:11 |

# Fig. 7

DATA FOR TOTALING

| TIME | TRANS-MISSION SOURCE | DESTINA-TION |
|---|---|---|
| 10:01 | A | B |
| 10:02 | A | B |
| 10:03 | C | E |
| 10:04 | C | F |
| 10:06 | C | G |
| 10:09 | C | E |
| 10:10 | A | B |
| 10:11 | C | E |

SECTION FREQUENCY

| TRANS-MISSION → ARRIVAL | SECTION FREQUENCY | FIRST OBSER-VATION TIME | LAST OBSER-VATION TIME |
|---|---|---|---|
| A→B | 2 | 10:01 | 10:02 |
| C→E | 1 | 10:03 | 10:03 |
| C→F | 1 | 10:04 | 10:04 |

| TRANS-MISSION → ARRIVAL | SECTION FREQUENCY | FIRST OBSER-VATION TIME | LAST OBSER-VATION TIME |
|---|---|---|---|
| C→G | 1 | 10:06 | 10:06 |
| C→E | 2 | 10:09 | 10:11 |
| A→B | 1 | 10:10 | 10:10 |

INTEGRATION FREQUENCY

| TRANS-MISSION → ARRIVAL | INTEGRA-TION FREQUENCY | FIRST OBSER-VATION TIME | LAST OBSER-VATION TIME |
|---|---|---|---|
| A→B | 3 | 10:01 | 10:10 |
| C→E | 3 | 10:03 | 10:11 |
| C→F | 1 | 10:04 | 10:04 |
| C→G | 1 | 10:06 | 10:06 |

Fig. 8

START

DIVIDE TOTALED DATA — S201

ALL SECTION DATA — S202

SELECT SECTION DATA — S203

ALL DATA IN SECTION DATA — S204

SELECT DATA — S205

GENERATED — S206

No → GENERATE SECTION FREQUENCY — S208

Yes → UPDATE SECTION FREQUENCY — S207

STORE SECTION FREQUENCY — S209

TOTAL INTEGRATION FREQUENCY — S210

END

## INTERNATIONAL SEARCH REPORT

International application No.

PCT/JP2018/021304

### A. CLASSIFICATION OF SUBJECT MATTER
Int.Cl. G06F13/00(2006.01)i, H04L12/70(2013.01)n

According to International Patent Classification (IPC) or to both national classification and IPC

### B. FIELDS SEARCHED

Minimum documentation searched (classification system followed by classification symbols)
Int.Cl. G06F13/00, H04L12/70

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-147067 A (FUJI XEROX CO., LTD.) 20 May 2004, paragraphs [0025]-[0026], [0030]-[0031], [0041], [0049], [0051], fig. 1-5 & US 2004/0083389 A1, paragraphs [0031]-[0032], [0036]-[0037], [0047], [0053], [0055], fig. 1-5 | 1-2, 4-9<br>3 |
| Y | JP 2010-128661 A (FUJITSU LTD.) 10 June 2010, paragraph [0049] (Family: none) | 3 |

☐ Further documents are listed in the continuation of Box C.

☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 July 2018 (27.07.2018) | 07 August 2018 (07.08.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011227850 A
- JP 2017110562 A